# EUROPEAN PATENT APPLICATION

(11) **EP 2 023 230 A1**
(43) Date of publication of application: **11.02.2009**
(21) Application number: 07730334.5
(22) Date of filing: 19.02.2007
(51) Int. Cl.: G06F 1/16, H04N 5/64

(54) **PROTECTOR FOR COMPUTER MONITORS**

(30) Priority: 16.05.2006 ES 200601117 U; 13.11.2006 ES 200602437 U
(71) Applicant: Start Design By Javi Crespo, S.L., 03001 Alicante (ES)
(72) Inventor: SÁNCHEZ CRESPO, Francisco Javier, 03001 Alicante (ES)
(74) Representative: Sempere Massa, Iván Luis
(86) International application number: PCT/ES2007/000093
(87) International publication number: WO 2007/132034

(57) **Abstract**

The protector is made up by means of the functional combination of two elements, one consisting of a front chassis (1) and another consisting of a rear chassis (2), joined together, the front chassis (1) having a window (4) for the screen (5) of the monitor (3), while the rear chassis (2) has grills on the sides (7) and rear for ventilation, and a lower rear cut out (8) for the passing through and play of the arm (9) that connects the corresponding monitor (3) with the base (10) of the same. Between the rear surface of the monitor (3) and the rear chassis (2) wads (11) of a soft spongy material can be placed, so that the monitor achieves suitable stable protection, the envisaged optimal stabilisation being achieved using fixing by a removable adhesive (12-12') positioned on the rear surface that surrounds the window (4) of the of the front chassis as well as in front of the monitor. Figures 1 and 5. A single tape with adhesive on both sides makes it easier than having to position wads of expanded polystyrene and a double Velcro®.

## Description

### OBJECTIVE OF THE INVENTION

This present invention relates to a protector that has been specially developed as a computer monitor accessory, particularly for flat monitors, for example the TFT type, totally protecting that monitor around its whole perimeter.

The purpose of the invention is to protect the monitor against falls or any kind of impact, as well as drastically reducing the amount of dust entering inside it, and all this with the possibility of changing the look of the monitor in shape and colour, as well as in print design.

The object of the invention is also to achieve perfect positional stability of the monitor by the protector.

### BACKGROUND TO THE INVENTION

As it is known, modern computer monitors are substantially flat and are supported by a base which is connected to an arm at the rear, to which the monitor itself is articulately joined. This configuration means that the stability of the monitor may be drastically reduced, compared to conventional monitors with a broad and deep base, therefore the risk of falling is substantially increased, with the risk that this carries for the monitor.

On the other hand, impacts which do not cause the monitor to fall are relatively common and could damage it.

Also, the design of the monitor is pre-established at the factory, in such a way that it is unlikely that it can be adapted to any specific decorative line in the place in which it is situated.

The applicant has no knowledge of the existence, up to this present time, of any type of protector which resolves the problem which has just been expressed.

### DESCRIPTION OF THE INVENTION

The protector proposed by the invention resolves the problems of the different aspects above mentioned.

For this and more specifically, the aforementioned protector is made up of the functional combination of two elements, a front chassis and a rear chassis, interconnectable by pressure and dimensionally suitable to define in its assembly a receptacle capable of housing the monitor screen inside it and allows the support arm of the same to pass through, in such a way that both chassis make up a casing that is mainly closed and from which the arm emerges from the lower rear and below that the base is situated.

The front chassis is characterised by having a wide rectangular window, whose dimensions are exactly the same as those established in inches of existing monitors on the market, to be able to view the screen, and it can optionally be provided with a lower window to access the monitor controls, where these exist.

For its part, the rear chassis has lateral ventilation grills, and in its lower and middle rear area it has a shaped cut-out dimensionally suitable to allow the classic arm which connects to the aforementioned monitor with its base to pass through the same and at the same time allows adjustments to be made between these elements in order to suitably position the screen for the user of the monitor.

As a complement to the described structure, a series of expanded polystyrene blocks or other similar material, with an adhesive and intended to be fixed to the internal face of the rear chassis, thus becoming spacers between the aforementioned chassis and the rear face of the monitor, to improve the fixing of the monitor to the latter, in such a way that blocks of different sizes and owing to the flexibility of the same due to its characteristics, enables it to mould the protector to any monitor to protect.

The front chassis as well as the rear chassis are multilayered structures, specifically a base of one layer of rigid plastic of any colour, a second layer consisting of an adhesive vinyl sheet fixed to the first layer and where it is feasible to emboss any print design, and a third layer consisting of a white or coloured transparent methacrylate, a layer that has the option of being made up from an "in situ" primer of synthetic lacquer instead of the aforementioned methacrylate.

As an improvement to achieve positional stability of the protector in relation to the monitor, a front chassis has been envisaged, the respective front window surrounding and up against the screen, it may include a removable adhesive on its rear surface, such as, for example, a "Velcro^{®}" type adhesive, which is complementary to another duly fixed to the perimeter of the screen, in such a way that correct positioning as regards the protector and the monitor can be established without the need to use the aforementioned expanded polystyrene blocks, a relative positioning that remains unchanged over time and that results in an aesthetic optimum for the assembly.

### DESCRIPTION OF THE DRAWINGS

To complete the description that is being made and with the objective of helping to understand the characteristics of the invention better, in accordance with a preferred practical example of the same, it is accompanied by a set of drawings, which are for illustrative purposes and not limited, as an integral part of this description, the following have been represented:

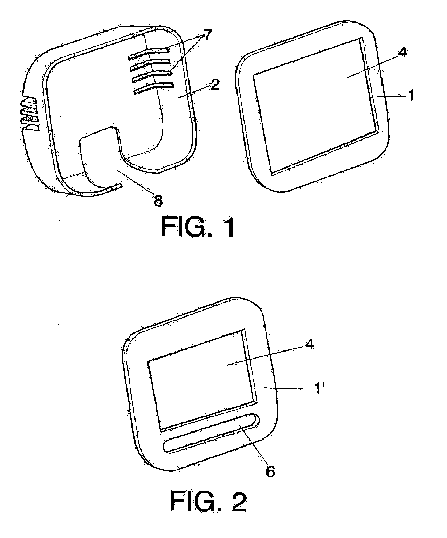

Figure 1. - Shows a cross-section in perspective of the two chassis that are involved in the protector for computer monitors which is the object of the present invention.
Figure 2. - Also, shows a view in perspective, an embodiment variant for the front chassis.
Figure 3. - Shows a perspective front view of the protector in its assembly suitably mounted over a monitor.
Figure 4. - Shows a rear perspective of the assembly represented in the previous figure.
Figure 5. - Shows a schematic representation in a side elevation and in section of the assembly represent in any of the figures 3 and 4.
Figure 6. - Shows, finally, a cross-sectional view of the protector suitably fitted to the corresponding monitor, in accordance with the improvement brought about by incorporating removable adhesive into the rear surface of the front chassis.

### PREFERRED EMBODIMENT OF THE INVENTION

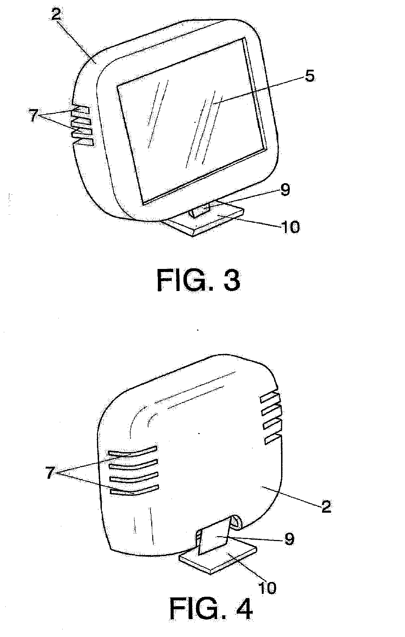

On looking at the figures described, it can be seen how the protector that is advocated is made up of a front chassis (1) and a rear chassis (2), the front chassis (1) adopting an essentially flat configuration, with a shape suited to the monitor (3), logically with a certain over-dimensioning, this chassis (1) mainly consisting of a rectangular window (4) being dimensionally identical to the screen (5) of the monitor (3). Optionally and as Figure 4 shows, the front chassis (1') can be provided with, besides the aforementioned window (4), a second window (6) for access to the monitor controls (3).

For its part, the rear chassis (2) adopts the configuration of a small saucepan open at the front, with grilles on the sides at the rear (7) for ventilation and with a wide cutting at the lower rear (8) which allows the arm assembly (9) to be put in place which connects the monitor (3) to the base (10) of the same.

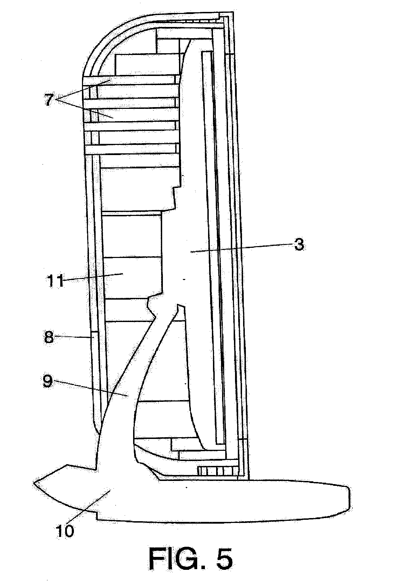

The chassis (1-1') and (2) are connected using male-female coupling devices and also between the rear surface of the monitor (3) and the rear chassis (2) wads (11), as shown in Figure 5, of a soft spongy material, for example, expanded polystyrene, can be placed, which may suitably stabilise the protector as regards the monitor.

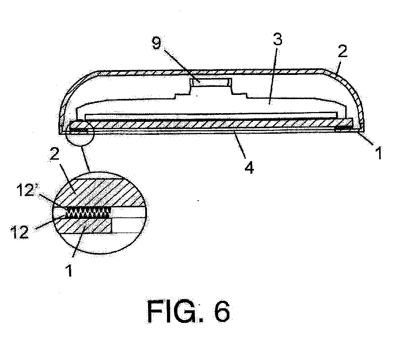

In a variation of the embodiment shown in Figure 6, the front chassis (1) on its rear surface and around the perimeter of its window incorporates an adhesive strip (12), preferably a Velcro® type adhesive strip, which is complimented by another adhesive strip (12') suitably fixed to the monitor (3), along the perimeter of its screen (5). In this way, after selecting the correct relative position between the protector and the monitor, the aforementioned elements are securely fixed by the adhesives (12-12'), with which the protector remains fixed under optional conditions for the monitor without the need to use or fix wads (11), with none of the looseness which can exist between them, this stable fixing being maintained until it is not required for any reason, the removal of the protector, which can be carried out rapidly and easily since the protector just needs to be pulled forward, keeping the monitor fixed, after having removed the rear chassis (2) of the said protector.

## Claims

1. A protector for computer monitors, in particular for flat TFT type monitors or similar, in those where the monitor screen is articulately joined to a rear arm which is connected to a support base, **characterised in that** it is made up by means of two chassis, a front one (1) and another rear one (2), provided with means for being joined by pressure, the front chassis (1) being provided with a wide rectangular window (4) coinciding dimensionally with the screen of the monitor (3), to which it is attached, while the rear chassis (2) has ventilation grilles down the rear side (7) and a wide cut out at the lower rear (8) and a means which allows the support arm (9) of the monitor (3) to pass through.

2. A protector for computer monitors, according to claim 1, **characterised in that** said front chassis (1') can be incorporate a second lower window (6), of suitable shape and dimension to give access to the monitor (3) controls, where these exist.

3. A protector for computer monitors, according to the previous claims, **characterised in that** said blocks (11) of a soft plastic material, such as, for example, expanded polystyrene, that act as spacers between the rear chassis and the rear surface of the monitor (3) can be fixed to the said rear chassis (2), specifically to its inside surface using adhesives.

4. A protector for computer monitors, according to the previous claims, **characterised in that** said front chassis (1-1') as well as the rear chassis (2) have a multilayered structure, based on rigid plastic layer of variable colour, a second layer consisting of an adhesive vinyl sheet fixed to the first layer and capable of receiving any print design, and a third layer based on transparent white or coloured methacrylate support.

5. A protector for computer monitors, according to claim 4, **characterised in that** said aforementioned methacrylate layer, can be substituted for an "in situ" primer of transparent synthetic lacquer.

6. A protector for computer monitors, according to any of the previous claims, **characterised in that** said front chassis (2) has, on its rear surface and surrounding the window attached to the front of the monitor (3) screen (5), a continuous or discontinuous adhesive strip (12) around its perimeter, which is complementary to another adhesive strip (12') around the perimeter of the monitor (3), surrounding the screen of the same, in such a way that by means of this or these adhesive strips (12) and (12'), the protector adopts an exact and stable position with respect to the monitor.

7. A protector for computer monitors, according to claim 6, **characterised in that** the removable adhesive strips (12 and 12'), are preferably of a Velcro^{®} type adhesive.
